# EUROPEAN PATENT SPECIFICATION

(11) **EP 1 231 112 B1**
(45) Date of publication and mention of the grant of the patent: **26.04.2006**
(21) Application number: 02002091.3
(22) Date of filing: 12.02.2002
(51) Int. Cl.: B60R 9/055

(54) **Car roof box with improved closure means**
Kraftfahrzeugdachkoffer mit verbesserter Verschlussvorrichtung
Coffre pour le toit d'un véhicule muni d'un mécanisme de fermeture amélioré

(30) Priority: 13.02.2001 IT MI010288
(43) Date of publication of application: 14.08.2002
(73) Proprietor: AUTOTEK S.r.l., 22060 Carugo (Como) (IT)
(72) Inventor: Sinelli, Edoardo, 20100 Milano (IT)
(74) Representative: Modiano, Micaela Nadia

(56) References cited:
- EP-A- 0 047 826
- EP-A- 0 422 678
- EP-A- 0 654 573
- DE-A- 2 542 384
- DE-A- 19 801 681
- DE-C- 19 742 253
- DE-U- 29 519 585
- FR-A- 2 611 455

## Description

The present invention relates to a car roof box with improved closure means.

It is known that car roof boxes have long been commercially available which are generally constituted by a base body to which a lid is connected; the lid is connected by means of hinge elements located at the longitudinal edges.

The hinge elements can slide so that one can choose to remove them at either of the two sides in order to open the lid by rotation about the hinges located on the other side.

In currently known solutions, the hinge elements of one side are connected on an actuation shaft that can perform a translational motion so as to simultaneously insert and extract all the hinge elements on that side. Document DE 19801681 A describes such a car roof box which corresponds to the preamble of claim 1.

This arrangement creates considerable difficulties during closure, especially when it is necessary to apply pressure to the lid when the box is very full and it is necessary to perform closure by applying pressure.

The use of mutually spaced hinge elements connected by means of a single shaft makes this operation particularly difficult and does not allow to apply a localized pressure that facilitates all closure steps.

The aim of the present invention is to provide a box in which it is possible to act with localized pressures during closure and to mutually separate the base and the lid during storage and transport, performing mutual assembly only at the time of delivery to the final user.

An object of the present invention is to provide a box in which it is possible to use a single lock for each side, blocking the hinge elements provided on the corresponding side.

Another object of the present invention is to provide a car roof box with improved closure means that can be easily obtained starting from commonly commercially available elements and materials and is furthermore competitive from a merely economical standpoint.

This aim and these and other objects that will become better apparent hereinafter are achieved by a car roof box with improved closure means, according to the invention, comprising a base body to which a lid body is connected by means of at least two removable hinge elements arranged on a longitudinal edge and at least two removable hinge elements arranged on the opposite longitudinal edge, said removable hinge elements having a pivot that is slidingly supported by one of said bodies and can be removably engaged in a seat formed by the other one of said bodies, characterized in that each one of said hinge elements can be actuated independently of the remaining hinge elements.

Further characteristics and advantages will become better apparent from the description of a preferred but not exclusive embodiment of a car roof box with improved closure means, illustrated only by way of non-limitative example in the accompanying drawings, wherein:

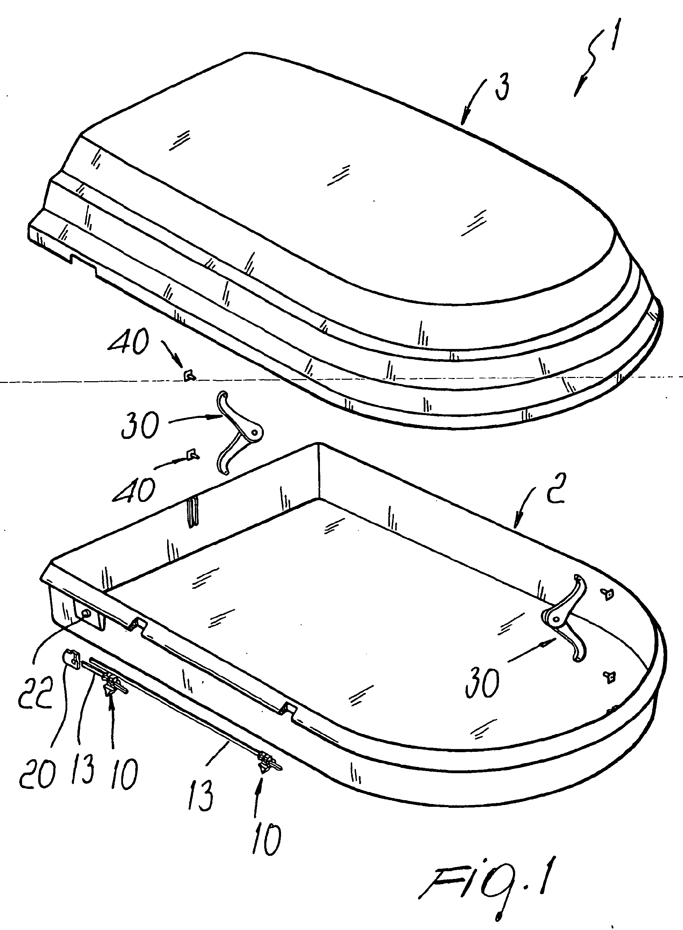

Figure 1 is an exploded perspective view of the car roof box;

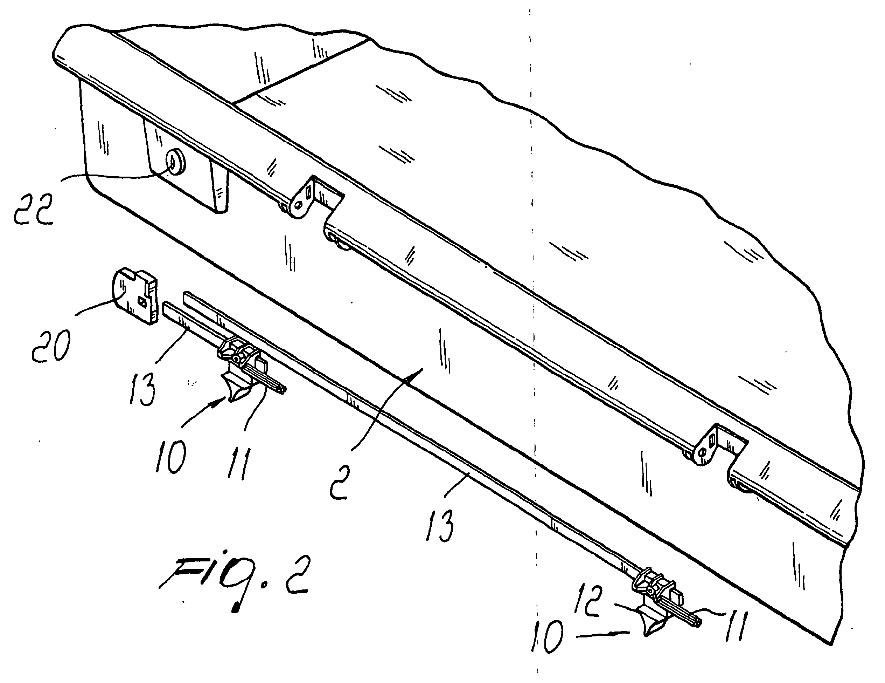

Figure 2 is an exploded perspective view of the hinge elements provided on one side;
Figure 3 is a schematic perspective view, in phantom lines, of a removable hinge element in the closed position;

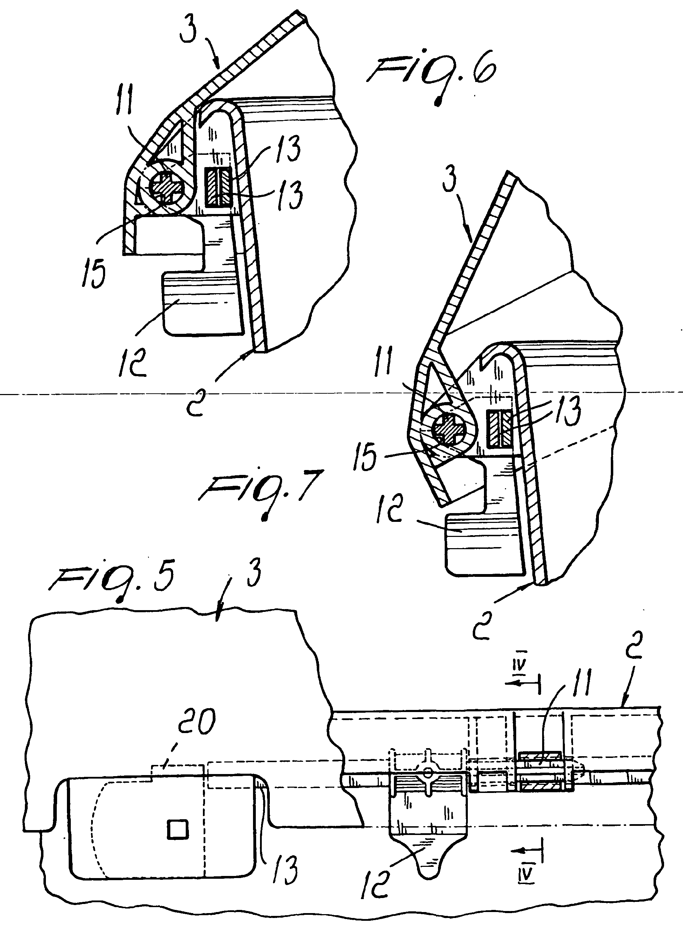

Figure 4 is a partially cutout front view of a hinge element in the open position;
Figure 5 is a front view of a hinge element in the closed position;

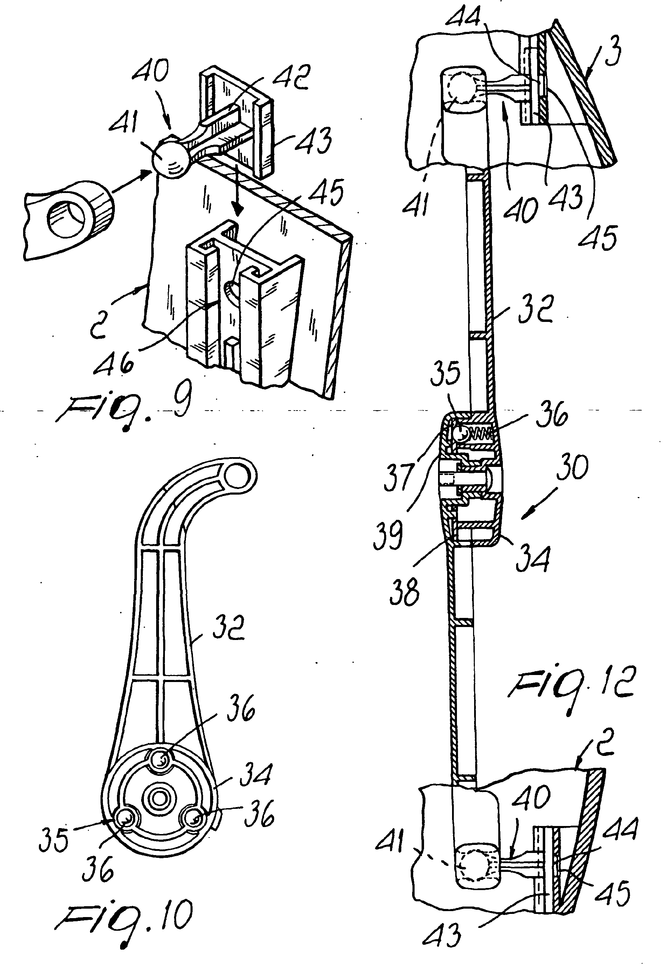

Figure 6 is a sectional view of a hinge element, taken along the line VI-VI of Figure 5;
Figure 7 is a sectional view, take along the line VII-VII of Figure 5, during opening performed by turning the lid;
Figure 8 is a sectional view, taken along the line VIII-VIII of Figure 5, when the lid is opened;
Figure 9 is an exploded perspective view of the means for removable connection of the caliper that joins the base body and the lid body;
Figure 10 is a schematic view of an arm of the caliper element;
Figure 11 is a schematic view of the box, illustrating its opening on the left side and its opening on the right side;
Figure 12 is a schematic sectional view, taken along the broken line XII-XII of Figure 11.

With reference to the figures, the car roof box with improved closure means according to the invention, generally designated by the reference numeral 1, comprises a base body 2 to which a lid body, generally designated by the reference numeral 3, is connected.

The base body 2 and the lid 3 can have any shape deemed appropriate, and the base body is provided with conventional means for connection to a car.

The base body 2 and the lid body 3 are joined at each longitudinal side by at least two removable hinge elements, designated by the reference numeral 10, which can slide in order to be arranged in an inserted position and in an extracted position.

In greater detail, each removable hinge element 10 has a pivot 11 that protrudes from an actuation button 12, which is arranged laterally and is connected to a guiding bar 13 that can slide longitudinally with respect to the longitudinal edge of the base body 2.

The pivot 11 can be accommodated removably in a seat or eye 15, which is formed by the lid body 3, to provide the closure at that side while allowing to constitute a hinge element if the box is opened on the opposite side.

Both hinge elements arranged on each side are connected to a corresponding guiding bar 13, which can slide freely independently of the other guiding bar, so as to allow to act on one hinge element independently of the remaining hinge elements, thus allowing to perform localized closure at each hinge element.

There is also an element for stopping the translational motion of the guiding bars 13 and accordingly of the hinge elements which is located at one end of the base body and has a plate-like body, with a protrusion 20 that can be arranged on the path followed by the guiding bars 13 when they perform their translational motion, in order to block the bars with the various hinge elements whose pivot is in the inserted position.

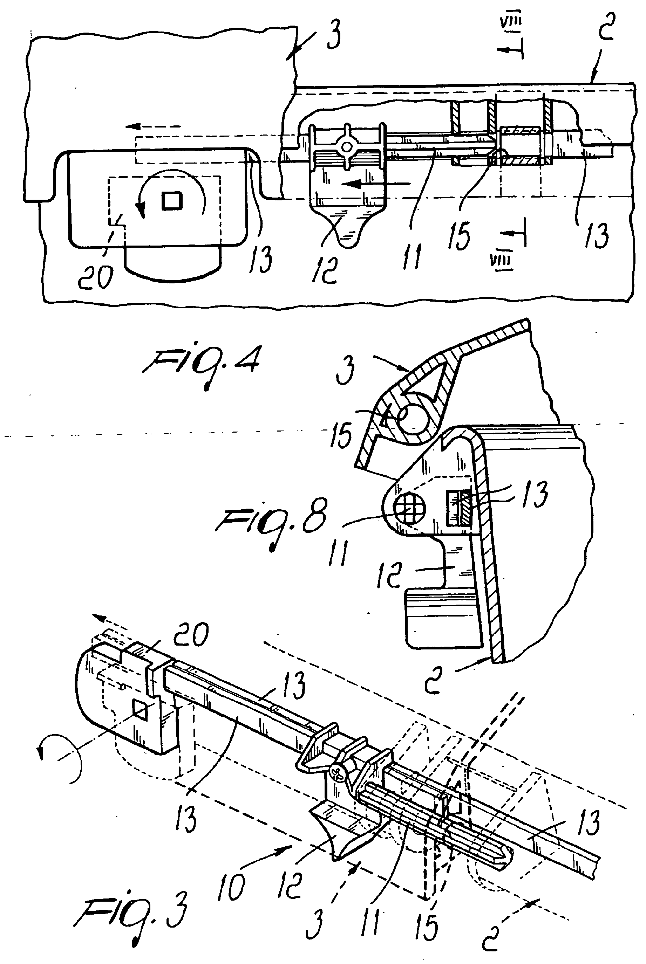

The stop element is controlled by lock means, generally designated by the reference numeral 22, which allow to block it in the position shown in Figure 3, in which the protrusion 20 engages the bars, preventing their sliding, and can rotate in the position shown in Figure 3, in which the protrusion 20 disengages from the path of the bars 13, which can slide freely, thus allowing to perform opening at the corresponding side of the box.

Another important characteristic of the invention is that there are caliper elements 30 for joining the base body and the lid body; said caliper elements can be removably coupled, so as to allow to carry and store the individual elements separately, so as to provide their mutual stacking that allows to reduce significantly transportation and storage bulk.

The caliper means 30 can be connected to removable connection means, which are constituted by pins 40 that have a spherical shaped head 41 that protrudes from a stem 42 that protrudes from a base 43 provided with a rear protrusion 44 that can be inserted in a locking hole 45 formed at a slider-like seat 46 that provides in practice the snap interlocking of the base 43, positioning it both at the central portion of the base body and at the central portion of the lid body, thus allowing the subsequent closure of the caliper elements 30.

The pin 40 can be fixed not only by virtue of the above described snapacting means but also by virtue of screw means.

The caliper elements 30 are constituted by a first arm 31 and by a second arm 32, which can be coupled, at one end, to the pin 40 and have a corresponding central body that allows to provide a mutual coupling in preset positions.

For this purpose, on one arm there is a female central body 34, which supports a plurality of insertion elements 35 constituted by balls which are pushed by springs 36 so as to enter recesses 37 formed correspondingly in a plate 38 that is supported by the female central body 39 connected to the other arm.

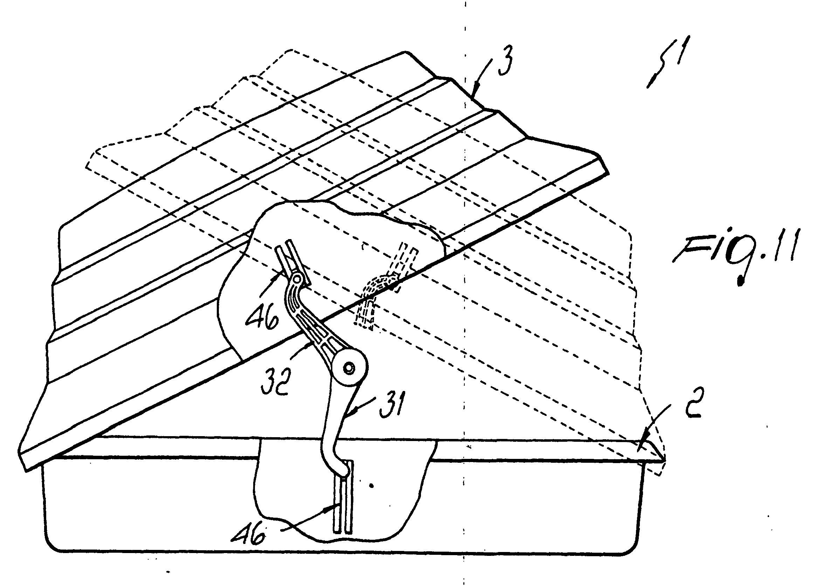

In this manner, it is possible to arrange the arms 31 and 32 in stable coupling positions in order to retain the lid in the open position, as shown schematically in Figure 11.

From the above description it is thus evident that the invention achieves the intended aim and objects, and in particular the fact is stressed that a box is provided which has detachable hinge elements that can be actuated independently of each other but can be retained in the blocked position by using a single lock element.

Moreover, the possibility to remove the connection pins of the caliper element allows to easily mutually separate the base body and the lid body during transportation and storage, with the possibility to perform connection in very short times and without having to resort to tools.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A car roof box with improved closure means, comprising a base body (2) to which a lid body (3) is connected by means of at least two removable hinge elements (10) arranged on a longitudinal edge and at least two removable hinge elements (10) arranged on the opposite longitudinal edge, said removable hinge elements (10) having a pivot (11) that is slidingly supported by one of said bodies (2, 3) and can be removably engaged in a seat (15) formed by the other one of said bodies (3, 2), **characterized in that** each one of said hinge elements (10) can be actuated independently of the remaining hinge elements (10), all of said at least two hinge elements (10) arranged on the same longitudinal edge being locked at the same time by a single lock.

2. The box according to claim 1, **characterized in that** each one of said hinge elements (10) comprises a pivot (11) that protrudes from an actuation button (12) connected to a guiding bar (13) slidingly supported on said longitudinal edge of one of said bodies (2, 3).

3. The box according to the preceding claims, **characterized in that** it comprises, at the ends of the guiding bars (13) of each side, a stop element (20) for stopping the translational motion of said guiding bars (13) which can be positioned removably along the path of the translational motion of said guiding bars (13).

4. The box according to one or more of the preceding claims, **characterized in that** said stop element comprises a plate-like element that is provided with a protrusion (20) that can be interposed along the direction of the translational motion of said guiding bars (13) by rotation.

5. The box according to one or more of the preceding claims, **characterized in that** the rotation of said stop element (20) is controlled by lock means (22).

## Revendications

1. Coffre de toit pour voiture muni de moyens de fermeture améliorés, comprenant un corps de base (2) auquel est relié un corps de capot (3) au moyen d'au moins deux éléments amovibles de charnière (10) adaptés sur une arête longitudinale et au moins deux éléments amovibles de charnière (10) adaptés sur l'arête longitudinale opposée, lesdits éléments amovibles de charnière (10) ayant un axe de pivot (11) qui est monté à coulissement sur l'un desdits corps (2,3) et qui peut être engagé de façon amovible dans un siège (15) formé par l'autre desdits corps (3,2), **caractérisé en ce que** chacun desdits éléments de charnière (10) peut être manoeuvré indépendamment des autres éléments de charnière (10), la totalité desdits au moins deux éléments de charnière (10) adaptés sur la même arête longitudinale étant verrouillée en même temps par un unique enclenchement.

2. Coffre selon la revendication 1, **caractérisé en ce que** chacun desdits éléments de charnière (10) comprend un axe de pivot (11) qui fait saillie depuis un bouton de manoeuvre (12) relié à une barre de guidage (13) montée à coulissement sur ladite arête longitudinale de l'un desdits corps (2, 3).

3. Coffre selon l'une des revendications précédentes, **caractérisé en ce qu'**il comporte, aux extrémités des barres de guidage (13) de chaque côté, un élément d'arrêt (20) pour stopper le mouvement de translation desdites barres de guidage (13) qui peut être positionné de façon amovible le long du chemin du mouvement de translation desdites barres de guidage (13).

4. Coffre selon l'une au moins des revendications précédentes, **caractérisé en ce que** ledit élément d'arrêt comprend un élément semblable à un plateau qui est muni d'une excroissance (20) qui peut être interposée le long de la direction de mouvement de translation desdites barres de guidage (13) par rotation.

5. Coffre selon l'une au moins des revendications précédentes, **caractérisé en ce que** la rotation dudit élément d'arrêt (20) est commandée par des moyens de verrouillage (22).

## Patentansprüche

1. Kraftfahrzeug-Dachkoffer mit verbesserter Verschlusseinrichtung, welcher einen Grundkörper (2) aufweist, mit welchem ein Deckelkörper (3) mit Hilfe von wenigstens zwei lösbaren Scharnierelementen (10) verbunden ist, welche an einem Längsrand angeordnet sind, und mittels wenigstens zwei lösbaren Scharnierelementen (10), welche auf dem gegenüberliegenden Längsrand angeordnet sind, wobei die lösbaren Scharnierelemente (10) einen Zapfen (11) haben, welcher gleitbeweglich mittels einer der Körper (2, 3) gelagert ist und lösbar mit einem Sitz (15) zusammen arbeiten kann, welcher am jeweils anderen Körper (3,2) ausgebildet ist, **dadurch gekennzeichnet, dass** jedes der Scharnierelemente (10) unabhängig von den verbleibenden Scharnierelementen (10) betätigt werden kann, und dass alle der wenigstens zwei Scharnierelemente (10), welche an ein und demselben Längsrand angeordnet sind, gleichzeitig mittels einer Verriegelungseinrichtung gesperrt werden können.

2. Kraftfahrzeug-Dachkoffer nach Anspruch 1, **dadurch gekennzeichnet, dass** jedes der Scharnierelemente (10) einen Zapfen (11) aufweist, welcher von einer Betätigungstaste (12) vorsteht, welche mit einem Führungsglied (13) verbunden ist, welches gleitbeweglich an dem Längsrand einer der Körper (2, 3) gelagert ist.

3. Kraftfahrzeug-Dachkoffer nach einem der vorangehenden Ansprüche, **dadurch gekennzeichnet, dass** an den Enden der Führungsglieder (3) auf jeder Seite ein Anschlagelement (20) vorgesehen ist, mittels welchem die Translationsbewegung der Führungsglieder (13) gestoppt wird, welche lösbar längs des Weges der Translationsbewegung der Führungsglieder (13) positioniert werden können.

4. Kraftfahrzeug-Dachkoffer nach einem oder mehreren der vorangehenden Ansprüche, **dadurch gekennzeichnet, dass** das Anschlagelement ein plattenähnliches Element aufweist, welches mit einem Vorsprung (20) versehen ist, welcher längs der Richtung der Translationsbewegung der Führungsglieder (13) mittels Verdrehung positionierbar ist.

5. Kraftfahrzeug-Dachkoffer nach einem oder mehreren der vorangehenden Ansprüche, **dadurch gekennzeichnet, dass** die Drehbewegung des Anschlagelements (20) durch eine Sperreinrichtung (22) steuerbar ist.
